# EUROPEAN PATENT APPLICATION

(11) **EP 4 668 951 A1**
(43) Date of publication of application: **24.12.2025**
(21) Application number: 24755936.2
(22) Date of filing: 26.01.2024
(51) Int. Cl.: H04W 72/0453, H04W 24/02

(54) **RESOURCE DETERMINATION METHOD AND APPARATUS, AND DEVICE**

(30) Priority: 13.02.2023 CN 202310106676
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN)
(74) Representative: dompatent
(86) International application number: PCT/CN2024/074137
(87) International publication number: WO 2024/169561

(57) **Abstract**

A resource determination method, an apparatus, and a device are provided. The resource determination method includes: determining a target configuration associated with a monitoring occasion (MO) according to a predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location.

## Description

### TECHNICAL FIELD

The present disclosure claims a priority of Chinese patent application No. 202310106676.8 filed on February 13, 2023 titled "RESOURCE DETERMINATION METHOD, APPARATUS, AND DEVICE" which is incorporated herein by reference in its entirety.

### TECHNICAL FIELD

The present disclosure relates to the field of communication technologies, and in particular, to a resource determination method, an apparatus, and a device.

### BACKGROUND

To address the coverage, latency, and capacity issues of uplink transmission in Time Division Duplex (TDD) mode, the current research focuses on non-overlapping sub-band full duplex (non-overlapping sub-band full duplex), where frequency domain resources are divided into multiple sub-bands that do not overlap with each other. Uplink and downlink frequency domain resources are located in different sub-bands, hereinafter referred to as sub-band full duplex.

Compared to full downlink symbols, the symbols where the uplink sub-band is located (hereinafter referred to as sub-band full duplex (SBFD) symbols) have fewer downlink frequency domain resources. Therefore, there may be inconsistencies in the available resources for the Physical Downlink Control Channel (PDCCH) between full downlink symbols and SBFD symbols.

However, in related art, multiple monitoring occasions (MOs) within one search space (SS) occupy the same time-domain length and frequency-domain position. Considering the inconsistency in PDCCH available resources between full downlink symbols and SBFD symbols, the related art may lead to conflicts between some MO resources and uplink sub-bands.

Currently, although base stations can avoid such conflicts by implementation-i.e., using only resources available in both downlink symbols and SBFD symbols for PDCCH transmission-this method, on one hand, restricts the flexibility of base station implementation and, on the other hand, limits the flexibility of PDCCH configuration, thereby constraining MO configuration.

### SUMMARY

The purpose of the present disclosure is to provide a resource determination method, apparatus, and device to solve the problem of restricted MO configuration in related art.

To address the above technical problem, embodiments of the present disclosure provide a resource determination method, applied to a terminal, including:
determining a target configuration associated with a monitoring occasion (MO) according to a predefined rule;
where the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the method further includes:
receiving resource configuration information sent by a network device;
the determining the target configuration associated with the MO according to the predefined rule includes:
   determining the target configuration associated with the MO according to the predefined rule and the resource configuration information;
   where the resource configuration information includes: configuration information of at least two control resource sets, and/or configuration information of at least two symbol lengths, and/or configuration information of at least two frequency domain resource locations;
   the configuration information of the at least two symbol lengths is configured to indicate at least two symbol lengths corresponding to one control resource set;
   the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a resource determination method, applied to a network device, including:
determining resource configuration information;
sending the resource configuration information to a terminal;
where the resource configuration information is used for the terminal to determine a target configuration associated with a monitoring occasion (MO) according to a predefined rule; the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the resource configuration information includes: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a resource determination device, where the resource determination device is a terminal, including a memory, a transceiver, and a processor:
the memory is configured to store a computer program; the transceiver is configured to transmit and receive data under the control of the processor; the processor is configured to read the computer program in the memory and perform the following operations:
determining a target configuration associated with a monitoring occasion (MO) according to a predefined rule;
where the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the operations further include:
using the transceiver to receive resource configuration information sent by a network device;
the determining the target configuration associated with the MO according to the predefined rule includes:
   determining the target configuration associated with the MO according to the predefined rule and the resource configuration information;
   where the resource configuration information includes: configuration information of at least two control resource sets, and/or configuration information of at least two symbol lengths, and/or configuration information of at least two frequency domain resource locations;
   the configuration information of the at least two symbol lengths is configured to indicate at least two symbol lengths corresponding to one control resource set;
   the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a resource determination device, where the resource determination device is a network device, including a memory, a transceiver, and a processor:
the memory is configured to store a computer program; the transceiver is configured to transmit and receive data under the control of the processor; the processor is configured to read the computer program in the memory and perform the following operations:
determining resource configuration information;
sending the resource configuration information to a terminal via the transceiver;
where the resource configuration information is used for the terminal to determine a target configuration associated with a monitoring occasion (MO) according to a predefined rule; the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the resource configuration information includes: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a resource determination apparatus, applied to a terminal, including:
a first determination unit, configured to determine a target configuration associated with a monitoring occasion (MO) according to a predefined rule;
where the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the apparatus further includes:
a first receiving unit, configured to receive resource configuration information sent by a network device;
the determining the target configuration associated with the MO according to the predefined rule includes:
   determining the target configuration associated with the MO according to the predefined rule and the resource configuration information;
   where the resource configuration information includes: configuration information of at least two control resource sets, and/or configuration information of at least two symbol lengths, and/or configuration information of at least two frequency domain resource locations;
   the configuration information of the at least two symbol lengths is configured to indicate at least two symbol lengths corresponding to one control resource set;
   the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a resource determination apparatus, applied to a network device, including:
a second determination unit, configured to determine resource configuration information;
a first sending unit, configured to send the resource configuration information to a terminal;
where the resource configuration information is used for the terminal to determine a target configuration associated with a monitoring occasion (MO) according to a predefined rule; the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that the frequency domain resource location associated with the MO does not overlap with the location of an uplink subband; where the location of the uplink subband is determined according to network configuration information, and the location of the uplink subband includes: a frequency domain location and/or a time domain location.

Optionally, the resource configuration information includes: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

Optionally, the first rule includes at least one of:
a first correspondence relationship between an index of the MO within a time unit and a configuration;
where the MO is an MO associated with one search space;
the time unit is a slot, a subframe, a frame, or a PDCCH monitoring period;
the configuration is a control resource set, a symbol length, and/or a frequency domain resource location.

Optionally, the second rule includes at least one of:
a second correspondence relationship between the MO and a configuration; where the MO is an MO indicated by each bit corresponding to monitoring symbol signaling within a slot;
a third correspondence relationship between a starting symbol position of the MO and a configuration;
where the configuration is a control resource set, a symbol length, and/or a frequency domain resource location.

Optionally, the third correspondence relationship includes at least one of:
a first sub-rule for determining a candidate symbol set where the MO is located according to the starting symbol position of the MO, and a second sub-rule associating a type of the candidate symbol set where the MO is located with a configuration;
where the configuration is a control resource set or a symbol length;
the type of symbol set includes: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

Optionally, the second sub-rule includes at least one of:
in a case where there is one symbol set of the first type among at least two candidate symbol sets, adopting the configuration corresponding to the symbol set of the first type as the target configuration associated with the MO;
in a case where there is no symbol set of the first type among at least two candidate symbol sets, and there is one symbol set of the second type, adopting the configuration corresponding to the symbol set of the second type as the target configuration associated with the MO;
in a case where there are at least two symbol sets of the first type among at least two candidate symbol sets, adopting, according to a predefined protocol, the configuration corresponding to one of the at least two symbol sets of the first type as the target configuration associated with the MO;
in a case where there are at least two symbol sets of the first type among at least two candidate symbol sets, adopting the configuration corresponding to the symbol set of the first type with the largest number of symbols as the target configuration associated with the MO;
in a case where there are at least two symbol sets of the first type among at least two candidate symbol sets, adopting the configuration corresponding to the symbol set of the first type with the smallest number of symbols as the target configuration associated with the MO;
in a case where there are at least two symbol sets of the second type among at least two candidate symbol sets, and there is one target set among the at least two symbol sets of the second type, adopting the configuration corresponding to the target set as the target configuration associated with the MO; where the target set is a symbol set of the second type whose corresponding frequency domain resource location does not overlap with the location of the uplink subband;
in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO;
in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO;
in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

Optionally, the third rule includes at least one of:
determining a frequency domain resource location that does not overlap with the uplink subband location among at least two frequency domain resource locations as the target frequency domain resource location associated with the MO;
in a case where there are at least two first frequency domain resource locations among at least two frequency domain resource locations, adopting, according to a predefined protocol, one of the at least two first frequency domain resource locations as the target frequency domain resource location associated with the MO; where the first frequency domain resource location is a frequency domain resource location that does not overlap with the uplink subband location;
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; where the second frequency domain resource location is a frequency domain resource location that does not overlap with the uplink subband location;
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; where the third frequency domain resource location is a frequency domain resource location that does not overlap with the uplink subband location.

Embodiments of the present disclosure further provide a processor-readable storage medium, where the processor-readable storage medium stores a computer program, and the computer program is configured to cause a processor to perform the resource determination method on the terminal side or the network device side.

The beneficial effects of the above technical solutions of the present disclosure are as follows:
In the above solution, the resource determination method determines the target configuration associated with the monitoring occasion (MO) according to a predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location; this enables the determination of multiple configurations for the MO to support subsequent PDCCH transmission, thereby avoiding the restriction of using only resources available in both downlink symbols and SBFD symbols for PDCCH transmission, thus avoiding limitations on the flexibility of network implementation and PDCCH configuration, improving the flexibility of MO configuration, and effectively solving the problem of restricted MO configuration in related art.

### BRIEF DESCRIPTION OF THE DRAWINGS

FIG. 1 is a schematic diagram of the architecture of a wireless communication system according to an embodiment of the present disclosure;
FIG. 2 is a first schematic flowchart of a resource determination method according to an embodiment of the present disclosure;
FIG. 3 is a second schematic flowchart of a resource determination method according to an embodiment of the present disclosure;
FIG. 4 is a first schematic structural diagram of a resource determination device according to an embodiment of the present disclosure;
FIG. 5 is a second schematic structural diagram of a resource determination device according to an embodiment of the present disclosure;
FIG. 6 is a first schematic structural diagram of a resource determination apparatus according to an embodiment of the present disclosure; and
FIG. 7 is a second schematic structural diagram of a resource determination apparatus according to an embodiment of the present disclosure

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. Based on the embodiments of the present disclosure, all other embodiments obtained by those of ordinary skill in the art without creative efforts shall fall within the protection scope of the present disclosure.

In the embodiments of the present disclosure, the term "and/or" describes the association relationship of associated objects, indicating that there may be three relationships. For example, A and/or B may indicate: A alone, both A and B, or B alone. The character "/" generally indicates that the associated objects are in an "or" relationship.

In the embodiments of the present disclosure, the term "multiple" refers to two or more, and other quantifiers are similar.

It is noted that the technical solutions provided in the embodiments of the present disclosure can be applied to various systems, especially fifth-generation mobile communication technology (5G) systems. For example, the applicable systems may include global system for mobile communication (GSM) systems, code division multiple access (CDMA) systems, wideband code division multiple access (WCDMA) systems, general packet radio service (GPRS) systems, long term evolution (LTE) systems, LTE frequency division duplex (FDD) systems, LTE time division duplex (TDD) systems, long term evolution advanced (LTE-A) systems, universal mobile telecommunication systems (UMTS), worldwide interoperability for microwave access (WiMAX) systems, 5G new radio (NR) systems, etc. These systems include terminal devices and network devices. The systems may also include core network parts, such as evolved packet system (EPS), 5G system (5GS), etc.

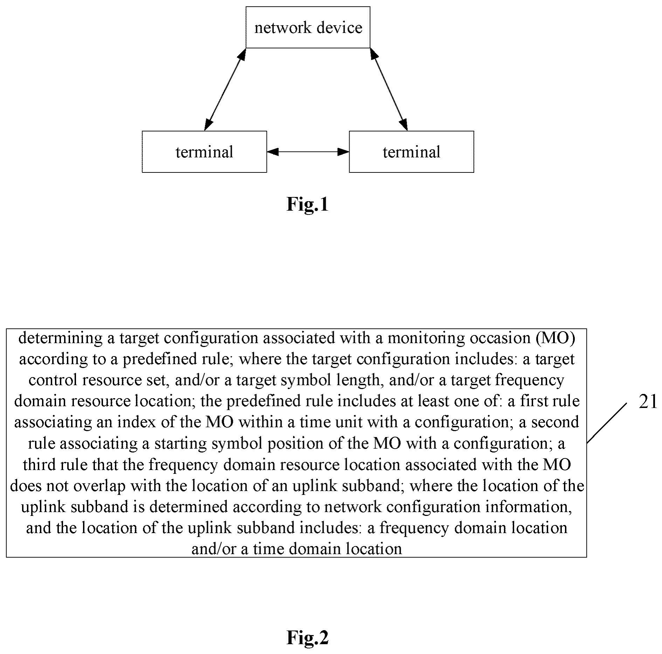

FIG. 1 shows a block diagram of a wireless communication system applicable to an embodiment of the present disclosure. The wireless communication system includes terminal devices (referred to as terminals for short) and network devices.

The terminal devices involved in the embodiments of the present disclosure may refer to devices that provide voice and/or data connectivity to users, handheld devices with wireless connectivity, or other processing devices connected to wireless modems. In different systems, the names of terminal devices may vary. For example, in 5G systems, terminal devices may be referred to as user equipment (UE). Wireless terminal devices may communicate with one or more core networks (CN) via a radio access network (RAN). Wireless terminal devices may be mobile terminal devices, such as mobile phones (or "cellular" phones) and computers with mobile terminal devices, e.g., portable, pocket-sized, handheld, computer-integrated, or vehicle-mounted mobile devices that exchange voice and/or data with the radio access network. For example, personal communication service (PCS) phones, cordless phones, session initiation protocol (SIP) phones, wireless local loop (WLL) stations, personal digital assistants (PDA), etc. Wireless terminal devices may also be referred to as systems, subscriber units, subscriber stations, mobile stations, mobile devices, remote stations, access points, remote terminal devices, access terminal devices, user terminal devices, user agents, user devices, etc. The embodiments of the present disclosure do not limit the terminology.

The network devices involved in the embodiments of the present disclosure may be base stations, which may include multiple cells serving terminals. Depending on the specific application scenario, base stations may also be referred to as access points or devices in the access network that communicate with wireless terminal devices via one or more sectors over an air interface, or other names. Network devices may be used to interchange received air frames with Internet Protocol (IP) packets, acting as routers between wireless terminal devices and the rest of the access network, where the rest of the access network may include IP communication networks. Network devices may also coordinate attribute management for the air interface. For example, the network devices involved in the embodiments of the present disclosure may be network devices (base transceiver stations, BTS) in GSM or CDMA, or network devices (NodeB) in WCDMA, or evolved network devices (evolutional Node B, eNB or e-NodeB) in LTE systems, 5G base stations (gNB) in 5G network architectures (next generation systems), or home evolved base stations (HeNB), relay nodes, femto base stations, pico base stations, etc. The embodiments of the present disclosure do not limit the terminology. In some network architectures, network devices may include centralized unit (CU) nodes and distributed unit (DU) nodes, which may also be geographically separated.

Network devices and terminal devices may each use one or more antennas for multi-input multi-output (MIMO) transmission, which may be single-user MIMO (SU-MIMO) or multi-user MIMO (MU-MIMO). Depending on the form and number of antenna combinations, MIMO transmission may be two-dimensional MIMO (2D-MIMO), three-dimensional MIMO (3D-MIMO), full-dimension MIMO (FD-MIMO), or massive MIMO, or may be diversity transmission, precoding transmission, beamforming transmission, etc.

The following first introduces the content related to the solutions provided in the embodiments of the present disclosure.

Currently, a UE (terminal) determines PDCCH monitoring occasions (MOs) based on parameters (including PDCCH monitoring period, monitoring offset, and slot pattern) configured by a base station for a search space (SS). One slot may be configured with multiple MOs, or multiple MOs may have different starting symbol positions.

One SS is associated with one control resource set (CORESET), where the CORESET includes frequency domain location and time domain symbol length (duration) information. That is, in related art, multiple MOs within one SS occupy the same time-domain length and frequency-domain position.

The UE determines the frequency domain location and time-domain symbol length (duration) information corresponding to the MO based on the CORESET associated with the SS, and finally determines the time-frequency domain resources corresponding to multiple MOs based on the slot pattern (starting symbol position of the MO) corresponding to the SS.

Based on the above, the embodiments of the present disclosure provide a resource determination method, apparatus, and device to solve the problem of restricted flexibility in MO configuration schemes in related art. The method, apparatus, and device are based on the same inventive concept. Since the principles of solving problems by the method, apparatus, and device are similar, the implementations of the method, apparatus, and device can be cross-referenced, and repeated descriptions are omitted.

The resource determination method provided in the embodiments of the present disclosure, applied to a terminal, as shown in FIG. 2, includes:

Step 21: determining a target configuration associated with a monitoring occasion (MO) according to a predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location.

The target configuration may specifically include: a target control resource set, or a target symbol length, or a target frequency domain resource location, or a target symbol length and a target frequency domain resource location, but is not limited thereto.

The resource determination method provided in the embodiments of the present disclosure determines the target configuration associated with the monitoring occasion (MO) according to a predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location; this enables the determination of multiple configurations for the MO to support subsequent PDCCH transmission, thereby avoiding the restriction of using only resources available in both downlink symbols and SBFD symbols for PDCCH transmission, thus avoiding limitations on the flexibility of network implementation and PDCCH configuration, improving the flexibility of MO configuration, and effectively solving the problem of restricted MO configuration in related art.

Further, the resource determination method further includes: receiving resource configuration information sent by a network device; the determining the target configuration associated with the MO according to the predefined rule includes: determining the target configuration associated with the MO according to the predefined rule and the resource configuration information; where the resource configuration information includes: configuration information of at least two control resource sets, and/or configuration information of at least two symbol lengths, and/or configuration information of at least two frequency domain resource locations; the configuration information of the at least two symbol lengths is configured to indicate at least two symbol lengths corresponding to one control resource set; the configuration information of the at least two frequency domain resource locations is configured to indicate at least two frequency domain resource locations corresponding to one control resource set.

This allows for accurate determination of the target configuration associated with the MO based on network configuration.

The first rule includes at least one of: a first correspondence relationship between an index of the MO within a time unit and a configuration; where the MO is an MO associated with one search space; the time unit is a slot, a subframe, a frame, or a PDCCH monitoring period; the configuration is a control resource set, a symbol length, and/or a frequency domain resource location.

This supports accurate determination of the target configuration associated with the MO based on the index of the MO within the time unit.

In the embodiments of the present disclosure, the second rule includes at least one of: (1) a second correspondence relationship between the MO and a configuration; where the MO is an MO indicated by each bit corresponding to monitoring symbol signaling within a slot; (2) a third correspondence relationship between a starting symbol position of the MO and a configuration; where the configuration is a control resource set, a symbol length, and/or a frequency domain resource location.

This supports accurate determination of the target configuration associated with the MO based on the monitoring symbol signaling within the slot or the starting symbol position of the MO. The starting symbol position of the MO can be determined based on the bits corresponding to the monitoring symbol signaling within the slot.

The third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

This supports accurate determination of the target configuration associated with the MO based on the type of the candidate symbol set where the MO is located. The third type can be understood as a cross-symbol type, but is not limited thereto. Additionally, the first sub-rule may include: when the configuration is a control resource set, determining the candidate symbol set based on the starting symbol position of the MO and the duration in the control resource set; when the configuration is a symbol length, determining the candidate symbol set based on the starting symbol position of the MO and the symbol length; but is not limited thereto.

In the embodiments of the present disclosure, the second sub-rule includes at least one of: (1) in a case where there is one symbol set of the first type among at least two candidate symbol sets (i.e., only one candidate symbol set is a full downlink symbol set), adopting the configuration corresponding to the symbol set of the first type as the target configuration associated with the MO; (2) in a case where there is no symbol set of the first type among at least two candidate symbol sets, and there is one symbol set of the second type (i.e., only one candidate symbol set is a full SBFD symbol set), adopting the configuration corresponding to the symbol set of the second type as the target configuration associated with the MO; (3) in a case where there are at least two symbol sets of the first type among at least two candidate symbol sets, adopting, according to a predefined protocol, the configuration corresponding to one of the at least two symbol sets of the first type as the target configuration associated with the MO; (4) in a case where there are at least two symbol sets of the first type among at least two candidate symbol sets, adopting the configuration corresponding to the symbol set of the first type with the largest number of symbols as the target configuration associated with the MO; (5) in a case where there are at least two symbol sets of the first type among at least two candidate symbol sets, adopting the configuration corresponding to the symbol set of the first type with the smallest number of symbols as the target configuration associated with the MO; (6) in a case where there are at least two symbol sets of the second type among at least two candidate symbol sets, and there is one target set among the at least two symbol sets of the second type, adopting the configuration corresponding to the target set as the target configuration associated with the MO; the target set is a symbol set of the second type whose corresponding frequency domain resource location does not overlap with the location of the uplink subband; (7) in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO; (8) in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO; (9) in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

This supports accurate determination of the target configuration associated with the MO based on the type of the candidate symbol set where the MO is located. The above (6)-(9) are for cases where multiple SBFD symbol sets exist: first, "the UE determines the configuration where the frequency domain resource does not conflict with the uplink subband (i.e., the configuration corresponding to the target set) as the target configuration associated with the MO"; if there are still multiple sets that meet the condition (i.e., multiple target sets exist), then determine the target configuration based on predefined rules, the largest number of symbols, and/or the smallest number of symbols.

The third rule includes at least one of: (1) determining a frequency domain resource location that does not overlap with the uplink subband location among at least two frequency domain resource locations as the target frequency domain resource location associated with the MO; (2) in a case where there are at least two first frequency domain resource locations among at least two frequency domain resource locations, adopting, according to a predefined protocol, one of the at least two first frequency domain resource locations as the target frequency domain resource location associated with the MO; the first frequency domain resource location is a frequency domain resource location that does not overlap with the uplink subband location; (3) in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; (4) in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

This allows for accurate determination of the target frequency domain resource location associated with the MO. The above (1) specifically may be: determining the time-frequency resource locations corresponding to the at least two frequency domain resource locations configured by the network device based on the starting symbol position of the MO and the symbol length duration (the duration of the MO) in the control resource set; determining the frequency domain resource location that does not overlap with the uplink subband location among the at least two frequency domain resource locations based on the time-frequency resource locations of the MO, and using it as the target frequency domain resource location associated with the MO.

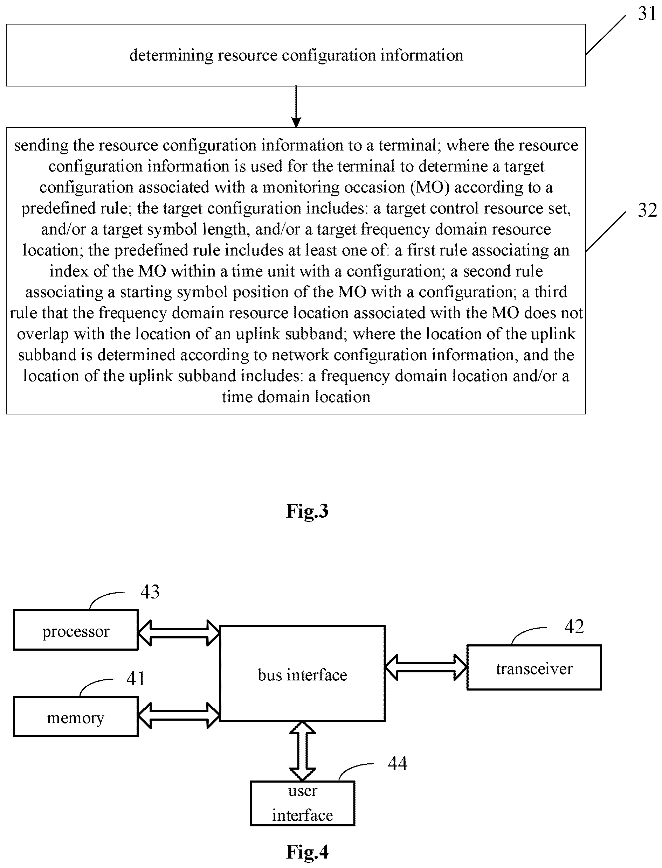

The embodiments of the present disclosure further provide a resource determination method, applied to a network device, as shown in FIG. 3, including:
Step 31: determining resource configuration information;
Step 32: sending the resource configuration information to a terminal; where the resource configuration information is used for the terminal to determine a target configuration associated with a monitoring occasion (MO) according to a predefined rule; the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location.

The target configuration may specifically include: a target control resource set, or a target symbol length, or a target frequency domain resource location, or a target symbol length and a target frequency domain resource location, but is not limited thereto.

The resource determination method provided in the embodiments of the present disclosure determines resource configuration information; sends the resource configuration information to a terminal; where the resource configuration information is used for the terminal to determine a target configuration associated with a monitoring occasion (MO) according to a predefined rule; the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that the frequency domain resource location associated with the MO does not overlap with the location of an uplink subband; where the location of the uplink subband is determined according to network configuration information, and the location of the uplink subband includes: a frequency domain location and/or a time domain location; this supports the determination of multiple configurations for the MO to enable subsequent PDCCH transmission, thereby avoiding the restriction of using only resources available in both downlink symbols and SBFD symbols for PDCCH transmission, thus avoiding limitations on the flexibility of network implementation and PDCCH configuration, improving the flexibility of MO configuration, and effectively solving the problem of restricted MO configuration in related art.

The resource configuration information includes: configuration information of at least two control resource sets, and/or configuration information of at least two symbol lengths, and/or configuration information of at least two frequency domain resource locations; the configuration information of the at least two symbol lengths is configured to indicate at least two symbol lengths corresponding to one control resource set; the configuration information of the at least two frequency domain resource locations is configured to indicate at least two frequency domain resource locations corresponding to one control resource set.

This enables the terminal to accurately determine the target configuration associated with the MO based on network configuration.

In the embodiments of the present disclosure, the first rule includes at least one of: a first correspondence relationship between an index of the MO within a time unit and a configuration; where the MO is an MO associated with one search space; the time unit is a slot, a subframe, a frame, or a PDCCH monitoring period; the configuration is a control resource set, a symbol length, and/or a frequency domain resource location.

This supports the terminal in accurately determining the target configuration associated with the MO based on the index of the MO within the time unit.

The second rule includes at least one of: (1) a second correspondence relationship between the MO and a configuration; where the MO is an MO indicated by each bit corresponding to monitoring symbol signaling within a slot; (2) a third correspondence relationship between a starting symbol position of the MO and a configuration; where the configuration is a control resource set, a symbol length, and/or a frequency domain resource location.

This supports the terminal in accurately determining the target configuration associated with the MO based on the monitoring symbol signaling within the slot or the starting symbol position of the MO. The starting symbol position of the MO can be determined based on the bits corresponding to the monitoring symbol signaling within the slot.

In the embodiments of the present disclosure, the third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

This supports the terminal in accurately determining the target configuration associated with the MO based on the type of the candidate symbol set where the MO is located. The third type can be understood as a cross-symbol type, but is not limited thereto. Additionally, the first sub-rule may include: when the configuration is a control resource set, determining the candidate symbol set based on the starting symbol position of the MO and the duration in the control resource set; when the configuration is a symbol length, determining the candidate symbol set based on the starting symbol position of the MO and the symbol length; but is not limited thereto.

The second sub-rule includes at least one of: (1) in a case where there is one symbol set of the first type among at least two candidate symbol sets (i.e., only one candidate symbol set is a full downlink symbol set), adopting the configuration corresponding to the symbol set of the first type as the target configuration associated with the MO; (2) in a case where there is no symbol set of the first type among at least two candidate symbol sets, and there is one symbol set of the second type (i.e., only one candidate symbol set is a full SBFD symbol set), adopting the configuration corresponding to the symbol set of the second type as the target configuration associated with the MO; (3) in a case where there are at least two symbol sets of the first type among at least two candidate symbol sets, adopting, according to a predefined protocol, the configuration corresponding to one of the at least two symbol sets of the first type as the target configuration associated with the MO; (4) in a case where there are at least two symbol sets of the first type among at least two candidate symbol sets, adopting the configuration corresponding to the symbol set of the first type with the largest number of symbols as the target configuration associated with the MO; (5) in a case where there are at least two symbol sets of the first type among at least two candidate symbol sets, adopting the configuration corresponding to the symbol set of the first type with the smallest number of symbols as the target configuration associated with the MO; (6) in a case where there are at least two symbol sets of the second type among at least two candidate symbol sets, and there is one target set among the at least two symbol sets of the second type, adopting the configuration corresponding to the target set as the target configuration associated with the MO; the target set is a symbol set of the second type whose corresponding frequency domain resource location does not overlap with the location of the uplink subband; (7) in a case where there are at least two symbol sets of the second type among at least two candidate symbol sets, and there are at least two target sets among the at least two symbol sets of the second type, adopting, according to a predefined protocol, the configuration corresponding to one of the at least two target sets as the target configuration associated with the MO; (8) in a case where there are at least two symbol sets of the second type among at least two candidate symbol sets, and there are at least two target sets among the at least two symbol sets of the second type, adopting the configuration corresponding to the target set with the largest number of symbols as the target configuration associated with the MO; (9) in a case where there are at least two symbol sets of the second type among at least two candidate symbol sets, and there are at least two target sets among the at least two symbol sets of the second type, adopting the configuration corresponding to the target set with the smallest number of symbols as the target configuration associated with the MO.

This supports the terminal in accurately determining the target configuration associated with the MO based on the type of the candidate symbol set where the MO is located. The above (6)-(9) are for cases where multiple SBFD symbol sets exist: first, "the UE determines the configuration where the frequency domain resource does not conflict with the uplink subband (i.e., the configuration corresponding to the target set) as the target configuration associated with the MO"; if there are still multiple sets that meet the condition (i.e., multiple target sets exist), (the UE) then determines the target configuration based on predefined rules, the largest number of symbols, and/or the smallest number of symbols.

In the embodiments of the present disclosure, the third rule includes at least one of: (1) determining a frequency domain resource location that does not overlap with the uplink subband location among at least two frequency domain resource locations as the target frequency domain resource location associated with the MO; (2) in a case where there are at least two first frequency domain resource locations among at least two frequency domain resource locations, adopting, according to a predefined protocol, one of the at least two first frequency domain resource locations as the target frequency domain resource location associated with the MO; the first frequency domain resource location is a frequency domain resource location that does not overlap with the uplink subband location; (3) in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; (4) in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

This supports the terminal in accurately determining the target frequency domain resource location associated with the MO. The above (1) specifically may be: determining the time-frequency resource locations corresponding to the at least two frequency domain resource locations configured by the network device based on the starting symbol position of the MO and the symbol length duration (the duration of the MO) in the control resource set; determining the frequency domain resource location that does not overlap with the uplink subband location among the at least two frequency domain resource locations based on the time-frequency resource locations of the MO, and using it as the target frequency domain resource location associated with the MO.

The following provides examples to illustrate the resource determination method described in the embodiments of the present disclosure, with the network device exemplified as a base station.

To address the above technical problem, the embodiments of the present disclosure provide a resource determination method, primarily involving: the UE determining the CORESET (corresponding to the target control resource set), duration (symbol length, corresponding to the target symbol length), and/or frequency domain resource (location, corresponding to the target frequency domain resource location) associated with the MO according to predefined protocol.

The solutions provided by the embodiments of the present disclosure are described below with specific examples.

Implementation 1 (corresponding to Rule 1): The behaviors of the base station and the UE are as follows:
Base station side behavior: The base station determines resource configuration information; the base station sends the resource configuration information to the UE; corresponding to the above determining of the resource configuration information; sending the resource configuration information to the terminal.

UE side behavior: The UE receives the resource configuration information sent by the base station; the UE determines the target configuration corresponding to the MO according to the received resource configuration information and the predefined rule; corresponding to the above receiving of the resource configuration information sent by the network device; determining, according to the predefined rule and the resource configuration information, the target configuration associated with the MO.

1. The base station configures multiple CORESETs for one SS. The specific predefined rules may include:
(1) For example, the base station configures two CORESETs: CORESET-1 and CORESET-2. The protocol predefines that the first to the Nth MOs correspond to CORESET-1, and the (N+1)th to the Mth MOs correspond to CORESET-2. This corresponds to the first correspondence relationship between the index of the MO within a time unit and the configuration; here, the index can be used to determine the starting symbol position of the MO.

The first to the Mth MOs may be MOs within a slot, subframe, or frame, or MOs within a PDCCH monitoring period.

(2) For example, the base station configures three CORESETs: CORESET-1, CORESET-2, and CORESET-3. The protocol predefines that the first to the Nth MOs correspond to CORESET-1, the (N+1)th to the Mth MOs correspond to CORESET-2, and the (M+1)th to the Pth MOs correspond to CORESET-3, where P > M > N. This corresponds to the first correspondence relationship between the index of the MO within a time unit and the configuration; here, the index can be used to determine the starting symbol position of the MO.

The first to the Pth MOs may be MOs within a slot, subframe, or frame, or MOs within a PDCCH monitoring period.

In this example, the three CORESETs may be configured for SBFD, non-SBFD, and mixed (including SBFD and non-SBFD) scenarios, but this is not limited thereto.

2. For the case where the base station configures one CORESET with multiple frequency domain resource locations (corresponding to the configuration information of at least two frequency domain resource locations used to indicate at least two frequency domain resource locations corresponding to one control resource set), the specific predefined rules may include:
(1) For example, the base station configures two frequency domain resource locations: F1 and F2. The protocol predefines that the first to the Nth MOs correspond to frequency domain resource (location) F1, and the (N+1)th to the Mth MOs correspond to frequency domain resource F2. This corresponds to the first correspondence relationship between the index of the MO within a time unit and the configuration; here, the index can be used to determine the starting symbol position of the MO.

The first to the Mth MOs may be MOs within a slot, subframe, or frame, or MOs within a PDCCH monitoring period.

(2) For example, the base station configures three frequency domain resource locations: F1, F2, and F3. The protocol predefines that the first to the Nth MOs correspond to frequency domain resource F1, the (N+1)th to the Mth MOs correspond to frequency domain resource F2, and the (M+1)th to the Pth MOs correspond to frequency domain resource F3, where P > M > N. This corresponds to the first correspondence relationship between the index of the MO within a time unit and the configuration; here, the index can be used to determine the starting symbol position of the MO.

The first to the Mth MOs may be MOs within a slot, subframe, or frame, or MOs within a PDCCH monitoring period.

3. Examples where the base station configures one CORESET with multiple durations (corresponding to the configuration information of at least two symbol lengths used to indicate at least two symbol lengths corresponding to one control resource set) are similar to the examples where the base station configures one CORESET with multiple frequency domain resource locations, and thus are not repeated here.

4. For the case where the base station configures one CORESET with multiple frequency domain resource locations and multiple durations, specific examples are as follows:
(1) For example, the base station configures one CORESET with two frequency domain resource locations (F1 and F2) and two durations (duration-1 and duration-2). The protocol predefines that the first to the Nth MOs correspond to frequency domain resource location F1 and time domain length duration-1; the (N+1)th to the Mth MOs correspond to frequency domain resource location F2 and time domain length duration-2 (corresponding to the first correspondence relationship between the index of the MO within a time unit and the configuration). The first to the Mth MOs may be MOs within a slot, subframe, or frame, or MOs within a PDCCH monitoring period.

Implementation 2 (corresponding to Rule 2): The behaviors of the base station and the UE are as follows:
Base station side behavior: The base station determines resource configuration information; the base station sends the resource configuration information to the UE.

UE side behavior: The UE receives the resource configuration information sent by the base station; the UE determines the target configuration corresponding to the MO according to the received resource configuration information and the predefined rule.
1. The base station configures multiple CORESETs for one SS. The specific predefined rules may include:
   (1) Rules corresponding to the second correspondence relationship in Rule 2:
      1) For example, the base station configures two CORESETs: CORESET-1 and CORESET-2. The MOs indicated by the first to the Nth bits of the monitoringSymbolsWithinSlot signaling correspond to CORESET-1, and the MOs indicated by the (N+1)th to the Mth bits correspond to CORESET-2 (corresponding to the second correspondence relationship between the MO and the configuration).
      2) For example, the base station configures three CORESETs: CORESET-1, CORESET-2, and CORESET-3. The MOs indicated by the first to the Nth bits of the monitoringSymbolsWithinSlot signaling correspond to CORESET-1, the MOs indicated by the (N+1)th to the Mth bits correspond to CORESET-2, and the MOs indicated by the (M+1)th to the Qth bits correspond to CORESET-3 (corresponding to the second correspondence relationship between the MO and the configuration), where Q = 14 > M > N.
   (2) Rules corresponding to the third correspondence relationship in Rule 2:
      1) For example, the base station configures two CORESETs: CORESET-1 and CORESET-2. MOs with starting (symbol) positions in the first to the Nth symbols are associated with CORESET-1, and MOs with starting positions in the (N+1)th to the Mth symbols are associated with CORESET-2 (corresponding to the third correspondence relationship between the starting symbol position of the MO and the configuration). Here, the starting symbol position of the MO can be determined based on the bits corresponding to the signaling.
         In this example, it is possible to support each SS starting point to match the durations provided by different CORESETs. The CORESET that satisfies the condition of not mixing (i.e., not crossing symbol types) is the corresponding CORESET, rather than fixing the MOs indicated by the first few bits to correspond to CORESET1 and the MOs indicated by the last few bits to correspond to CORESET2. If the starting point of an SS corresponds to two durations that both satisfy the condition of not mixing, the MO is by default associated with CORESET1 or CORESET2.
      2) For example, the base station configures three CORESETs: CORESET-1, CORESET-2, and CORESET-3. MOs with starting positions in the first to the Nth symbols are associated with CORESET-1, MOs with starting positions in the (N+1)th to the Mth symbols are associated with CORESET-2, and MOs with starting positions in the (M+1)th to the Qth symbols are associated with CORESET-3 (corresponding to the third correspondence relationship between the starting symbol position of the MO and the configuration).
      3) For example (base station configuration), there are two CORESETs: CORESET-1 and CORESET-2. The UE determines, based on the symbol length information (duration) in CORESET-1 and CORESET-2, that the (candidate) symbol sets where the MO is located are set-1 and set-2, respectively (corresponding to the first sub-rule); where it is supported that the symbol types where the MO is located are all full downlink (corresponding to the first type) or SBFD (corresponding to the second type):
         a) If the symbol types included in set-1 and set-2 are both full downlink (i.e., the types of set-1 and set-2 are both the first type), it may be specified that CORESET-1 or CORESET-2 is the CORESET associated with the MO; corresponding to the case where there are at least two first-type symbol sets among at least two candidate symbol sets, adopting, according to a protocol predefinition, the configuration corresponding to one of the at least two first-type symbol sets as the target configuration associated with the MO;
         b) If the symbol types included in set-1 and set-2 are both SBFD symbols (i.e., the types of set-1 and set-2 are both the second type), the UE determines the CORESET whose frequency domain resource does not conflict with the uplink subband as the CORESET associated with the MO (corresponding to the case where there are at least two second-type symbol sets among at least two candidate symbol sets and there is one target set among the at least two second-type symbol sets, adopting the configuration corresponding to the target set as the target configuration associated with the MO); if both CORESET-1 and CORESET-2 satisfy the above condition, it may be specified that CORESET-1 or CORESET-2 is the CORESET associated with the MO (corresponding to the case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO); specifically: when the types of the symbol sets where the MO is located, as determined by the two CORESETs, are both SBFD symbols, it is necessary to further determine whether the frequency domain conflicts with the uplink subband;
            Alternatively, if the symbol types included in set-1 and set-2 are both SBFD symbols, it may be specified that CORESET-1 or CORESET-2 is the CORESET associated with the MO; this can be understood as: in the case where there are at least two second-type symbol sets among at least two candidate symbol sets, adopting, according to a protocol predefinition, the configuration corresponding to one of the at least two second-type symbol sets as the target configuration associated with the MO. Here, this solution does not determine whether the frequency domain resource conflicts with the uplink subband, which can be ensured by the base station implementation.
         c) If only set-1 or set-2 includes symbol types that are full downlink (i.e., the type of set-1 or set-2 is the first type), it may be specified that the CORESET resource corresponding to set-1 or set-2 is the CORESET associated with the MO; corresponding to the case where there is one first-type symbol set among at least two candidate symbol sets, adopting the configuration corresponding to the first-type symbol set as the target configuration associated with the MO;
         d) If only set-1 or set-2 includes symbol types that are all SBFD symbols (i.e., the type of set-1 or set-2 is the second type, and the other set is of a mixed symbol type), it may be specified that the CORESET resource corresponding to set-1 or set-2 is the CORESET associated with the MO (corresponding to the case where there is no first-type symbol set among at least two candidate symbol sets and there is one second-type symbol set, adopting the configuration corresponding to the second-type symbol set as the target configuration associated with the MO); where the base station side can ensure through implementation that this CORESET resource does not conflict with the uplink subband.
            For the above a) to d), it is not supported that both set-1 and set-2 are of mixed symbol types (i.e., it is not supported that both set-1 and set-2 include two types of symbols).
2. For the case where the base station configures one CORESET with multiple frequency domain resource locations (corresponding to the configuration information of at least two frequency domain resource locations used to indicate at least two frequency domain resource locations corresponding to one control resource set), the specific predefined rules may include:
   (1) Rules corresponding to the second correspondence relationship in Rule 2:
      1) For example, the base station configures two frequency domain resource locations: F1 and F2. The MOs indicated by the first to the Nth bits of the monitoringSymbolsWithinSlot signaling correspond to frequency domain resource F1, and the MOs indicated by the (N+1)th to the Mth bits correspond to frequency domain resource F2 (corresponding to the second correspondence relationship between the MO and the configuration).
      2) For example, the base station configures three frequency domain resource locations: F1, F2, and F3. The MOs indicated by the first to the Nth bits of the monitoringSymbolsWithinSlot signaling correspond to frequency domain resource F1, the MOs indicated by the (N+1)th to the Mth bits correspond to frequency domain resource F2, and the MOs indicated by the (M+1)th to the Qth bits correspond to frequency domain resource F3 (corresponding to the second correspondence relationship between the MO and the configuration), where Q = 14 > M > N.
   (2) Rules corresponding to the third correspondence relationship in Rule 2:
      1) MOs with starting symbols in the first to the Nth symbols are associated with frequency domain resource F1, and MOs with starting symbols in the (N+1)th to the Mth symbols are associated with frequency domain resource F2 (corresponding to the third correspondence relationship between the starting symbol position of the MO and the configuration).
      2) MOs with starting symbols in the first to the Nth symbols are associated with frequency domain resource F1, MOs with starting symbols in the (N+1)th to the Mth symbols are associated with frequency domain resource F2, and MOs with starting symbols in the (M+1)th to the Qth symbols are associated with frequency domain resource F3 (corresponding to the third correspondence relationship between the starting symbol position of the MO and the configuration).
3. For the case where the base station configures one CORESET with multiple durations, the specific predefined rules may include (the third correspondence relationship in Rule 2):
   (1) For example, the base station configures one CORESET with two durations: duration-1 and duration-2. The UE determines, based on duration-1 and duration-2 and the configured starting symbol position of the MO (corresponding to the first sub-rule), that the symbol sets where the MO is located are candidate symbol sets set-1 and set-2, respectively:
      1) If the symbol types included in set-1 and set-2 are both full downlink, it may be specified that the duration corresponding to the MO is determined based on duration-1 or duration-2 or the maximum or minimum of the two (i.e., duration-1 and duration-2); corresponding to the case where there are at least two first-type symbol sets among at least two candidate symbol sets, adopting, according to a protocol predefinition, the configuration corresponding to one of the at least two first-type symbol sets as the target configuration associated with the MO; or, in the case where there are at least two first-type symbol sets among at least two candidate symbol sets, adopting the configuration corresponding to the first-type symbol set with the largest number of symbols as the target configuration associated with the MO; or, in the case where there are at least two first-type symbol sets among at least two candidate symbol sets, adopting the configuration corresponding to the first-type symbol set with the smallest number of symbols as the target configuration associated with the MO.
      2) If the symbol types included in set-1 and set-2 are both SBFD symbols, it may be specified that the duration corresponding to the MO is determined based on duration-1 or duration-2 or the maximum or minimum of the two, as well as the condition that it does not conflict with the uplink subband; corresponding to the case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO; or, in the case where there are at least two second-type symbol sets among at least two candidate symbol sets and there are at least two target sets among the at least two second-type symbol sets, adopting the configuration corresponding to the target set with the largest number of symbols as the target configuration associated with the MO; or, in the case where there are at least two second-type symbol sets among at least two candidate symbol sets and there are at least two target sets among the at least two second-type symbol sets, adopting the configuration corresponding to the target set with the smallest number of symbols as the target configuration associated with the MO.
      3) If only set-1 or set-2 includes symbol types that are all full downlink (the other is SBFD or mixed symbol types), it may be specified that duration-1 or duration-2 corresponding to set-1 or set-2 is the duration associated with the MO; corresponding to the case where there is one first-type symbol set among at least two candidate symbol sets, adopting the configuration corresponding to the first-type symbol set as the target configuration associated with the MO.
      4) If only set-1 or set-2 includes symbol types that are all SBFD symbols (the other is of mixed symbol types), it may be specified that duration-1 or duration-2 corresponding to set-1 or set-2 is the duration associated with the MO; corresponding to the case where there is no first-type symbol set among at least two candidate symbol sets and there is one second-type symbol set, adopting the configuration corresponding to the second-type symbol set as the target configuration associated with the MO.

For the above 1) to 4), it is not supported that both set-1 and set-2 are of mixed symbol types.

Through this example, the UE determines the duration corresponding to the MO according to the predefined rules, thereby ensuring that the symbol types where the MO is located are either full downlink symbols or SBFD symbols, avoiding the case where the symbol types where the MO is located include both full downlink and SBFD symbols. Furthermore, for the case where one MO occupies multiple symbols, it avoids the increased complexity of PDCCH mapping caused by inconsistent frequency domain resources on different symbols where the MO is located. For example, assuming the durations are 2 and 3:

In a certain slot, the starting symbol of the MO is a full downlink symbol, followed by only one full downlink symbol, and then an SBFD symbol. In this case, the MO in this slot should select the CORESET with duration=2 to ensure that the MO does not span mixed symbols.

In another slot, the starting symbol of the MO is still a full downlink symbol, and the subsequent symbols are all full downlink symbols or at least two full downlink symbols. In this case, either duration=2 or duration=3 can satisfy the condition, so the default is to select the maximum duration or a fixed CORESET or duration to determine a CORESET.

In a certain slot, the starting symbol of the MO is an SBFD symbol, and the subsequent symbols are all SBFD symbols or at least two SBFD symbols. In this case, either duration=2 or duration=3 can satisfy the condition, so the default is to select the maximum duration or a fixed CORESET to determine a CORESET.

4. For the case where the base station configures one CORESET with multiple frequency domain resource locations and multiple durations, specific examples are as follows:
(1) Rules corresponding to the second correspondence relationship in Rule 2:
   1) For example, the base station configures one CORESET with two frequency domain resource locations (F1 and F2) and two durations (duration-1 and duration-2). The MOs indicated by the first to the Nth bits of the monitoringSymbolsWithinSlot signaling correspond to frequency domain resource location F1 and time domain length duration-1; the MOs indicated by the (N+1)th to the Mth bits correspond to frequency domain resource location F2 and time domain length duration-2 (corresponding to the second correspondence relationship between the MO and the configuration).
   2) For example, the base station configures one CORESET with two frequency domain resource locations (F1 and F2) and two durations (duration-1 and duration-2). MOs with starting positions in the first to the Nth symbols correspond to frequency domain resource location F1 and time domain length duration-1; MOs with starting positions in the (N+1)th to the Mth symbols correspond to frequency domain resource location F2 and time domain length duration-2 (corresponding to the third correspondence relationship between the starting symbol position of the MO and the configuration).

It should be noted that the values of N, M, and/or P involved in the above examples may be predefined or configured by the base station. For the case where the values of N, M, and/or P are configured by the base station, it can better match the deployment of subband full-duplex systems.

For the above examples, within each BWP (Bandwidth Part), the maximum number of CORESETs that the base station can configure or the UE supports may be greater than 3. The UE does not support the frequency domain resource of the MO conflicting with the uplink subband, thereby achieving PDCCH resource configuration flexibility in full downlink symbols while ensuring that the PDCCH resources in SBFD symbols do not conflict with the uplink subband.

Implementation 3 (corresponding to Rule 3): The base station configures multiple frequency domain resource locations for one CORESET, and the UE and the base station determine the frequency domain resource associated with the MO according to the frequency domain location of the uplink subband and the predefined rule.

For this solution, the behaviors of the base station and the UE are as follows:

Base station side behavior: The base station determines multiple frequency domain resource location information (corresponding to the configuration information of the frequency domain resource locations); the base station sends the multiple frequency domain resource location information to the UE.

UE side behavior: The UE receives the multiple frequency domain resource location information sent by the base station; the UE determines the frequency domain resource associated with the MO according to the received multiple frequency domain resource location information and the predefined rule.

For the case where the base station configures multiple frequency domain resource locations, the specific predefined rules may include:
(1) For example, the base station configures two frequency domain resource locations: F1 and F2. The UE determines the time-frequency (resource) positions of the MO corresponding to the two frequency domain resource (locations) based on the starting position of the MO and the duration in the CORESET; (based on the MO time-frequency position) determining the frequency domain resource location that does not conflict with the uplink subband (location) among the two frequency domain resource locations as the frequency domain resource (location) corresponding to the MO; if both frequency domain resource locations do not conflict with the uplink subband, then F1 or F2 is determined as the resource location where the MO is located (i.e., the frequency domain resource corresponding to the MO). This corresponds to determining the frequency domain resource location that does not overlap with the uplink subband location among at least two frequency domain resource locations as the target frequency domain resource location associated with the MO.
(2) For example, the base station configures two frequency domain resource locations: F1 and F2, and both F1 and F2 do not conflict with the uplink subband (location). In this case, it may be specified that F1 or F2 is the frequency domain resource associated with the MO; corresponding to the case where there are at least two first frequency domain resource locations among at least two frequency domain resource locations, adopting, according to a protocol predefinition, one of the at least two first frequency domain resource locations as the target frequency domain resource location associated with the MO; the first frequency domain resource location is a frequency domain resource location that does not overlap with the uplink subband location.
(3) For example, the base station configures two frequency domain resource locations: F1 and F2, and both F1 and F2 do not conflict with the uplink subband (location). In this case, it may be specified that F1 or F2 with the largest number of corresponding RBs is the frequency domain resource associated with the MO; corresponding to the case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location.
(4) For example, the base station configures two frequency domain resource locations: F1 and F2, and both F1 and F2 do not conflict with the uplink subband (location). In this case, it may be specified that F1 or F2 with the smallest number of corresponding RBs is the frequency domain resource associated with the MO; corresponding to the case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

It should be noted that similar content between the above examples can be cross-referenced, and redundant descriptions are omitted.

In summary, in this solution, different PDCCH monitoring starting points (i.e., the starting symbol positions of the MO) are associated with different CORESETs and/or durations and/or frequency domain resource (locations), which can ensure that the symbol types where the MO is located are all full downlink symbols, all SBFD symbols, or the frequency domain resource corresponding to the MO does not conflict with the uplink subband. This effectively avoids using only resources available in both downlink symbols and SBFD symbols for PDCCH transmission, ensuring the flexibility of base station implementation and the flexibility of PDCCH configuration.

Additionally, in the present disclosure, other solutions besides the "predefined rules" mentioned above may also be used to determine the target configuration associated with the MO, such as:

Within each BWP, the maximum number of CORESETs that the base station can configure or the UE supports is greater than 3. The UE does not support the frequency domain resource of the MO conflicting with the uplink subband. This solution can achieve PDCCH resource configuration flexibility in full downlink symbols while ensuring that the PDCCH frequency domain resources in SBFD symbols do not conflict with the uplink subband.

Embodiments of the present disclosure also provide a resource determination device. The resource determination device is a terminal, as shown in FIG. 4, and includes a memory 41, a transceiver 42, and a processor 43:

The memory 41 is configured to store a computer program; the transceiver 42 is configured to transmit and receive data under the control of the processor 43; the processor 43 is configured to read the computer program in the memory 41 and perform the following operations:
determining a target configuration associated with a Monitoring Occasion (MO) according to a predefined rule;
where the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that a frequency domain resource location associated with the MO does not overlap with a location of an uplink subband; the location of the uplink subband is determined according to network configuration information, the location of the uplink subband includes: a frequency domain location and/or a time domain location.

The resource determination device provided by the embodiments of the present disclosure determines the target configuration associated with the MO according to the predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that a frequency domain resource location associated with the MO does not overlap with a location of an uplink subband; the location of the uplink subband is determined according to network configuration information, the location of the uplink subband includes: a frequency domain location and/or a time domain location; it can achieve the determination of multiple configurations of the MO to support subsequent PDCCH transmission, thereby avoiding using only resources available in both downlink symbols and SBFD symbols for PDCCH transmission, thus avoiding limiting the flexibility of network implementation and the flexibility of PDCCH configuration, improving the flexibility of MO configuration, and effectively solving the problem of restricted MO configuration in related art.

Specifically, the transceiver 42 is configured to transmit and receive data under the control of the processor 43.

In FIG. 4, the bus architecture may include any number of interconnected buses and bridges, specifically linking various circuits represented by one or more processors represented by the processor 43 and memory represented by the memory 41. The bus architecture may also link various other circuits such as peripherals, voltage regulators, and power management circuits, which are well known in the art and therefore will not be further described herein. The bus interface provides an interface. The transceiver 42 may be multiple elements, including a transmitter and a receiver, providing units for communicating with various other devices over transmission media, which include wireless channels, wired channels, optical cables, and other transmission media. For different user devices, the user interface 44 may also be an interface capable of externally or internally connecting required devices, including but not limited to a keypad, display, speaker, microphone, joystick, etc.

The processor 43 is responsible for managing the bus architecture and general processing, and the memory 41 may store data used by the processor 43 when performing operations.

Optionally, the processor 43 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor executes the computer program stored in the memory to perform any of the methods provided by the embodiments of the present disclosure according to the obtained executable instructions. The processor and the memory may also be physically arranged separately.

Further, the operations further include: using the transceiver to receive resource configuration information sent by a network device; the determining the target configuration associated with the MO according to the predefined rule includes: determining the target configuration associated with the MO according to the predefined rule and the resource configuration information; where the resource configuration information includes: configuration information of at least two control resource sets, and/or configuration information of at least two symbol lengths, and/or configuration information of at least two frequency domain resource locations; the configuration information of the at least two symbol lengths is used to indicate at least two symbol lengths corresponding to one control resource set; the configuration information of the at least two frequency domain resource locations is used to indicate at least two frequency domain resource locations corresponding to one control resource set.

The first rule includes at least one of: a first correspondence relationship between an index of the MO within a time unit and a configuration; where the MO is an MO associated with one search space; the time unit is a slot, subframe, frame, or Physical Downlink Control Channel (PDCCH) monitoring period; the configuration is a control resource set, a symbol length, and/or a frequency domain resource location.

In the embodiments of the present disclosure, the second rule includes at least one of: a second correspondence relationship between the MO and a configuration; the MO is an MO indicated by each bit corresponding to monitoring symbol signaling within a slot; a third correspondence relationship between a starting symbol position of the MO and a configuration; where the configuration is a control resource set, a symbol length, and/or a frequency domain resource location.

The third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

In the embodiments of the present disclosure, the second sub-rule includes at least one of: in a case where there is one first-type symbol set among at least two candidate symbol sets, adopting the configuration corresponding to the first-type symbol set as the target configuration associated with the MO; in a case where there is no first-type symbol set among at least two candidate symbol sets and there is one second-type symbol set, adopting the configuration corresponding to the second-type symbol set as the target configuration associated with the MO; in a case where there are at least two first-type symbol sets among at least two candidate symbol sets, adopting, according to a protocol predefinition, the configuration corresponding to one of the at least two first-type symbol sets as the target configuration associated with the MO; in a case where there are at least two first-type symbol sets among at least two candidate symbol sets, adopting the configuration corresponding to the first-type symbol set with the largest number of symbols as the target configuration associated with the MO; in a case where there are at least two first-type symbol sets among at least two candidate symbol sets, adopting the configuration corresponding to the first-type symbol set with the smallest number of symbols as the target configuration associated with the MO; in a case where there are at least two second-type symbol sets among at least two candidate symbol sets and there is one target set among the at least two second-type symbol sets, adopting the configuration corresponding to the target set as the target configuration associated with the MO; the target set is a second-type symbol set whose corresponding frequency domain resource location does not overlap with the location of the uplink subband; in a case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO; in a case where there are at least two second-type symbol sets among at least two candidate symbol sets and there are at least two target sets among the at least two second-type symbol sets, adopting the configuration corresponding to the target set with the largest number of symbols as the target configuration associated with the MO; in a case where there are at least two second-type symbol sets among at least two candidate symbol sets and there are at least two target sets among the at least two second-type symbol sets, adopting the configuration corresponding to the target set with the smallest number of symbols as the target configuration associated with the MO.

The third rule includes at least one of: determining a frequency domain resource location that does not overlap with the uplink subband location among at least two frequency domain resource locations as the target frequency domain resource location associated with the MO; in a case where there are at least two first frequency domain resource locations among at least two frequency domain resource locations, adopting, according to a protocol predefinition, one of the at least two first frequency domain resource locations as the target frequency domain resource location associated with the MO; the first frequency domain resource location is a frequency domain resource location that does not overlap with the uplink subband location; in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

It should be noted that the above device provided by the embodiments of the present disclosure can implement all the method steps implemented by the terminal-side method embodiments and achieve the same technical effects. Details and beneficial effects that are the same as those in the method embodiments are not repeated herein.

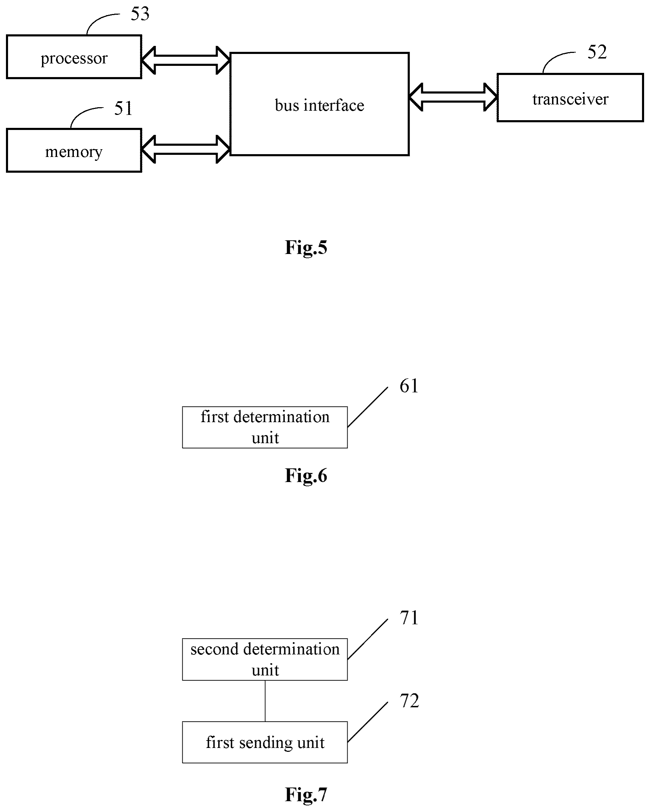

Embodiments of the present disclosure also provide a resource determination device. The resource determination device is a network device, as shown in FIG. 5, and includes a memory 51, a transceiver 52, and a processor 53:

The memory 51 is configured to store a computer program; the transceiver 52 is configured to transmit and receive data under the control of the processor 53; the processor 53 is configured to read the computer program in the memory 51 and perform the following operations:
determining resource configuration information;
sending the resource configuration information to a terminal via the transceiver 52;
where the resource configuration information is used for the terminal to determine a target configuration associated with a Monitoring Occasion (MO) according to a predefined rule; the target configuration includes: a target control resource set, and/or a target symbol length, and/or a target frequency domain resource location;
the predefined rule includes at least one of:
a first rule associating an index of the MO within a time unit with a configuration;
a second rule associating a starting symbol position of the MO with a configuration;
a third rule that a frequency domain resource location associated with the MO does not overlap with a location of an uplink subband; the location of the uplink subband is determined according to network configuration information, the location of the uplink subband includes: a frequency domain location and/or a time domain location.

The resource determination device provided by the embodiments of the present disclosure determines resource configuration information; sends the resource configuration information to a terminal; where the resource configuration information is used for the terminal to determine a target configuration associated with a Monitoring Occasion (MO) according to a predefined rule; the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that a frequency domain resource location associated with the MO does not overlap with a location of an uplink subband; the location of the uplink subband is determined according to network configuration information, the location of the uplink subband includes: a frequency domain location and/or a time domain location; it can support the determination of multiple configurations of the MO to support subsequent PDCCH transmission, thereby avoiding using only resources available in both downlink symbols and SBFD symbols for PDCCH transmission, thus avoiding limiting the flexibility of network implementation and the flexibility of PDCCH configuration, improving the flexibility of MO configuration, and effectively solving the problem of restricted MO configuration in related art.

Specifically, the transceiver 52 is configured to transmit and receive data under the control of the processor 53.

In FIG. 5, the bus architecture may include any number of interconnected buses and bridges, specifically linking various circuits represented by one or more processors represented by the processor 53 and memory represented by the memory 51. The bus architecture may also link various other circuits such as peripherals, voltage regulators, and power management circuits, which are well known in the art and therefore will not be further described herein. The bus interface provides an interface. The transceiver 52 may be multiple elements, including a transmitter and a receiver, providing units for communicating with various other devices over transmission media, which include wireless channels, wired channels, optical cables, and other transmission media. The processor 53 is responsible for managing the bus architecture and general processing, and the memory 51 may store data used by the processor 53 when performing operations.

The processor 53 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The resource configuration information includes: configuration information of at least two control resource sets, and/or configuration information of at least two symbol lengths, and/or configuration information of at least two frequency domain resource locations; the configuration information of the at least two symbol lengths is used to indicate at least two symbol lengths corresponding to one control resource set; the configuration information of the at least two frequency domain resource locations is used to indicate at least two frequency domain resource locations corresponding to one control resource set.

In the embodiments of the present disclosure, the first rule includes at least one of: a first correspondence relationship between an index of the MO within a time unit and a configuration; where the MO is an MO associated with one search space; the time unit is a slot, subframe, frame, or Physical Downlink Control Channel (PDCCH) monitoring period; the configuration is a control resource set, a symbol length, and/or a frequency domain resource location.

The second rule includes at least one of: a second correspondence relationship between the MO and a configuration; the MO is an MO indicated by each bit corresponding to monitoring symbol signaling within a slot; a third correspondence relationship between a starting symbol position of the MO and a configuration; where the configuration is a control resource set, a symbol length, and/or a frequency domain resource location.

In the embodiments of the present disclosure, the third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

The second sub-rule includes at least one of: in a case where there is one first-type symbol set among at least two candidate symbol sets, adopting the configuration corresponding to the first-type symbol set as the target configuration associated with the MO; in a case where there is no first-type symbol set among at least two candidate symbol sets and there is one second-type symbol set, adopting the configuration corresponding to the second-type symbol set as the target configuration associated with the MO; in a case where there are at least two first-type symbol sets among at least two candidate symbol sets, adopting, according to a protocol predefinition, the configuration corresponding to one of the at least two first-type symbol sets as the target configuration associated with the MO; in a case where there are at least two first-type symbol sets among at least two candidate symbol sets, adopting the configuration corresponding to the first-type symbol set with the largest number of symbols as the target configuration associated with the MO; in a case where there are at least two first-type symbol sets among at least two candidate symbol sets, adopting the configuration corresponding to the first-type symbol set with the smallest number of symbols as the target configuration associated with the MO; in a case where there are at least two second-type symbol sets among at least two candidate symbol sets and there is one target set among the at least two second-type symbol sets, adopting the configuration corresponding to the target set as the target configuration associated with the MO; the target set is a second-type symbol set whose corresponding frequency domain resource location does not overlap with the location of the uplink subband; in a case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO; in a case where there are at least two second-type symbol sets among at least two candidate symbol sets and there are at least two target sets among the at least two second-type symbol sets, adopting the configuration corresponding to the target set with the largest number of symbols as the target configuration associated with the MO; in a case where there are at least two second-type symbol sets among at least two candidate symbol sets and there are at least two target sets among the at least two second-type symbol sets, adopting the configuration corresponding to the target set with the smallest number of symbols as the target configuration associated with the MO.

In the embodiments of the present disclosure, the third rule includes at least one of: determining a frequency domain resource location that does not overlap with the uplink subband location among at least two frequency domain resource locations as the target frequency domain resource location associated with the MO; in a case where there are at least two first frequency domain resource locations among at least two frequency domain resource locations, adopting, according to a protocol predefinition, one of the at least two first frequency domain resource locations as the target frequency domain resource location associated with the MO; the first frequency domain resource location is a frequency domain resource location that does not overlap with the uplink subband location; in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

It should be noted that the above device provided by the embodiments of the present disclosure can implement all the method steps implemented by the network device-side method embodiments and achieve the same technical effects. Details and beneficial effects that are the same as those in the method embodiments are not repeated herein.

Embodiments of the present disclosure also provide a resource determination apparatus, applied to a terminal, as shown in FIG. 6, including:
a first determination unit 61, configured to determine a target configuration associated with a Monitoring Occasion (MO) according to a predefined rule;
where the target configuration includes: a target control resource set, and/or a target symbol length, and/or a target frequency domain resource location;
the predefined rule includes at least one of:
a first rule associating an index of the MO within a time unit with a configuration;
a second rule associating a starting symbol position of the MO with a configuration;
a third rule that a frequency domain resource location associated with the MO does not overlap with a location of an uplink subband; the location of the uplink subband is determined according to network configuration information, the location of the uplink subband includes: a frequency domain location and/or a time domain location.

The resource determination apparatus provided by the embodiments of the present disclosure determines the target configuration associated with the MO according to the predefined rule; where the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that a frequency domain resource location associated with the MO does not overlap with a location of an uplink subband; the location of the uplink subband is determined according to network configuration information, the location of the uplink subband includes: a frequency domain location and/or a time domain location; it can achieve the determination of multiple configurations of the MO to support subsequent PDCCH transmission, thereby avoiding using only resources available in both downlink symbols and SBFD symbols for PDCCH transmission, thus avoiding limiting the flexibility of network implementation and the flexibility of PDCCH configuration, improving the flexibility of MO configuration, and effectively solving the problem of restricted MO configuration in related art.

Further, the resource determination apparatus further includes: a first receiving unit, configured to receive resource configuration information sent by a network device; the determining the target configuration associated with the MO according to the predefined rule includes: determining the target configuration associated with the MO according to the predefined rule and the resource configuration information; where the resource configuration information includes: configuration information of at least two control resource sets, and/or configuration information of at least two symbol lengths, and/or configuration information of at least two frequency domain resource locations; the configuration information of the at least two symbol lengths is used to indicate at least two symbol lengths corresponding to one control resource set; the configuration information of the at least two frequency domain resource locations is used to indicate at least two frequency domain resource locations corresponding to one control resource set.

The first rule includes at least one of: a first correspondence relationship between an index of the MO within a time unit and a configuration; where the MO is an MO associated with one search space; the time unit is a slot, subframe, frame, or Physical Downlink Control Channel (PDCCH) monitoring period; the configuration is a control resource set, a symbol length, and/or a frequency domain resource location.

In the embodiments of the present disclosure, the second rule includes at least one of: a second correspondence relationship between the MO and a configuration; the MO is an MO indicated by each bit corresponding to monitoring symbol signaling within a slot; a third correspondence relationship between a starting symbol position of the MO and a configuration; where the configuration is a control resource set, a symbol length, and/or a frequency domain resource location.

The third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

In the embodiments of the present disclosure, the second sub-rule includes at least one of: in a case where there is one first-type symbol set among at least two candidate symbol sets, adopting the configuration corresponding to the first-type symbol set as the target configuration associated with the MO; in a case where there is no first-type symbol set among at least two candidate symbol sets and there is one second-type symbol set, adopting the configuration corresponding to the second-type symbol set as the target configuration associated with the MO; in a case where there are at least two first-type symbol sets among at least two candidate symbol sets, adopting, according to a protocol predefinition, the configuration corresponding to one of the at least two first-type symbol sets as the target configuration associated with the MO; in a case where there are at least two first-type symbol sets among at least two candidate symbol sets, adopting the configuration corresponding to the first-type symbol set with the largest number of symbols as the target configuration associated with the MO; in a case where there are at least two first-type symbol sets among at least two candidate symbol sets, adopting the configuration corresponding to the first-type symbol set with the smallest number of symbols as the target configuration associated with the MO; in a case where there are at least two second-type symbol sets among at least two candidate symbol sets and there is one target set among the at least two second-type symbol sets, adopting the configuration corresponding to the target set as the target configuration associated with the MO; the target set is a second-type symbol set whose corresponding frequency domain resource location does not overlap with the location of the uplink subband; in a case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO; in a case where there are at least two second-type symbol sets among at least two candidate symbol sets and there are at least two target sets among the at least two second-type symbol sets, adopting the configuration corresponding to the target set with the largest number of symbols as the target configuration associated with the MO; in a case where there are at least two second-type symbol sets among at least two candidate symbol sets and there are at least two target sets among the at least two second-type symbol sets, adopting the configuration corresponding to the target set with the smallest number of symbols as the target configuration associated with the MO.

The third rule includes at least one of: determining a frequency domain resource location that does not overlap with the uplink subband location among at least two frequency domain resource locations as the target frequency domain resource location associated with the MO; in a case where there are at least two first frequency domain resource locations among at least two frequency domain resource locations, adopting, according to a protocol predefinition, one of the at least two first frequency domain resource locations as the target frequency domain resource location associated with the MO; the first frequency domain resource location is a frequency domain resource location that does not overlap with the uplink subband location; in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

It should be noted that the above apparatus provided by the embodiments of the present disclosure can implement all the method steps implemented by the terminal-side method embodiments and achieve the same technical effects. Details and beneficial effects that are the same as those in the method embodiments are not repeated herein.

Embodiments of the present disclosure also provide a resource determination apparatus, applied to a network device, as shown in FIG. 7, including:
a second determination unit 71, configured to determine resource configuration information;
a first sending unit 72, configured to send the resource configuration information to a terminal;
where the resource configuration information is used for the terminal to determine a target configuration associated with a Monitoring Occasion (MO) according to a predefined rule; the target configuration includes: a target control resource set, and/or a target symbol length, and/or a target frequency domain resource location;
the predefined rule includes at least one of:
   a first rule associating an index of the MO within a time unit with a configuration;
   a second rule associating a starting symbol position of the MO with a configuration;
   a third rule that a frequency domain resource location associated with the MO does not overlap with a location of an uplink subband; the location of the uplink subband is determined according to network configuration information, the location of the uplink subband includes: a frequency domain location and/or a time domain location.

The resource determination apparatus provided by the embodiments of the present disclosure determines resource configuration information; sends the resource configuration information to a terminal; where the resource configuration information is used for the terminal to determine a target configuration associated with a Monitoring Occasion (MO) according to a predefined rule; the target configuration includes: a target control resource set, and/or a target symbol length, and/or a target frequency domain resource location; the predefined rule includes at least one of: a first rule associating an index of the MO within a time unit with a configuration; a second rule associating a starting symbol position of the MO with a configuration; a third rule that a frequency domain resource location associated with the MO does not overlap with a location of an uplink subband; the location of the uplink subband is determined according to network configuration information, the location of the uplink subband includes: a frequency domain location and/or a time domain location; it can support the determination of multiple configurations of the MO to support subsequent PDCCH transmission, thereby avoiding using only resources available in both downlink symbols and SBFD symbols for PDCCH transmission, thus avoiding limiting the flexibility of network implementation and the flexibility of PDCCH configuration, improving the flexibility of MO configuration, and effectively solving the problem of restricted MO configuration in related art.

The resource configuration information includes: configuration information of at least two control resource sets, and/or configuration information of at least two symbol lengths, and/or configuration information of at least two frequency domain resource locations; the configuration information of the at least two symbol lengths is used to indicate at least two symbol lengths corresponding to one control resource set; the configuration information of the at least two frequency domain resource locations is used to indicate at least two frequency domain resource locations corresponding to one control resource set.

In the embodiments of the present disclosure, the first rule includes at least one of: a first correspondence relationship between an index of the MO within a time unit and a configuration; where the MO is an MO associated with one search space; the time unit is a slot, subframe, frame, or Physical Downlink Control Channel (PDCCH) monitoring period; the configuration is a control resource set, a symbol length, and/or a frequency domain resource location.

The second rule includes at least one of: a second correspondence relationship between the MO and a configuration; the MO is an MO indicated by each bit corresponding to monitoring symbol signaling within a slot; a third correspondence relationship between a starting symbol position of the MO and a configuration; where the configuration is a control resource set, a symbol length, and/or a frequency domain resource location.

In the embodiments of the present disclosure, the third correspondence relationship includes at least one of: a first sub-rule for determining a candidate symbol set where the MO is located according to the starting symbol position of the MO, and a second sub-rule associating a type of the candidate symbol set where the MO is located with a configuration; where the configuration is a control resource set or a symbol length; the type of symbol set includes: a first type where all included symbols are of a full downlink symbol type, a second type where all included symbols are of a full SBFD symbol type, and a third type where the included symbols include both the full downlink symbol type and the full SBFD symbol type; the SBFD symbol represents a symbol where an uplink subband is located; the full downlink symbol and the SBFD symbol are determined according to network configuration information.

The second sub-rule includes at least one of: in a case where there is one first-type symbol set among at least two candidate symbol sets, adopting the configuration corresponding to the first-type symbol set as the target configuration associated with the MO; in a case where there is no first-type symbol set among at least two candidate symbol sets and there is one second-type symbol set, adopting the configuration corresponding to the second-type symbol set as the target configuration associated with the MO; in a case where there are at least two first-type symbol sets among at least two candidate symbol sets, adopting, according to a protocol predefinition, the configuration corresponding to one of the at least two first-type symbol sets as the target configuration associated with the MO; in a case where there are at least two first-type symbol sets among at least two candidate symbol sets, adopting the configuration corresponding to the first-type symbol set with the largest number of symbols as the target configuration associated with the MO; in a case where there are at least two first-type symbol sets among at least two candidate symbol sets, adopting the configuration corresponding to the first-type symbol set with the smallest number of symbols as the target configuration associated with the MO; in a case where there are at least two second-type symbol sets among at least two candidate symbol sets and there is one target set among the at least two second-type symbol sets, adopting the configuration corresponding to the target set as the target configuration associated with the MO; the target set is a second-type symbol set whose corresponding frequency domain resource location does not overlap with the location of the uplink subband; in a case where there are at least two second-type symbol sets among at least two candidate symbol sets and there are at least two target sets among the at least two second-type symbol sets, adopting, according to a protocol predefinition, the configuration corresponding to one of the at least two target sets as the target configuration associated with the MO; in a case where there are at least two second-type symbol sets among at least two candidate symbol sets and there are at least two target sets among the at least two second-type symbol sets, adopting the configuration corresponding to the target set with the largest number of symbols as the target configuration associated with the MO; in a case where there are at least two second-type symbol sets among at least two candidate symbol sets and there are at least two target sets among the at least two second-type symbol sets, adopting the configuration corresponding to the target set with the smallest number of symbols as the target configuration associated with the MO.

In the embodiments of the present disclosure, the third rule includes at least one of: determining a frequency domain resource location that does not overlap with the uplink subband location among at least two frequency domain resource locations as the target frequency domain resource location associated with the MO; in a case where there are at least two first frequency domain resource locations among at least two frequency domain resource locations, adopting, according to a protocol predefinition, one of the at least two first frequency domain resource locations as the target frequency domain resource location associated with the MO; the first frequency domain resource location is a frequency domain resource location that does not overlap with the uplink subband location; in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; the second frequency domain resource location is a frequency domain resource location that does not overlap with the uplink subband location; in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; the third frequency domain resource location is a frequency domain resource location that does not overlap with the uplink subband location.

It should be noted that the above apparatus provided by the embodiments of the present disclosure can implement all the method steps implemented by the network device-side method embodiments and achieve the same technical effects. Details and beneficial effects that are the same as those in the method embodiments are not repeated herein.

It should be noted that the division of units in the embodiments of the present disclosure is schematic and is only a logical function division. In actual implementation, there may be other division methods. In addition, the functional units in the various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure essentially or the part contributing to the related technology or all or part of the technical solution may be embodied in the form of a software product. The computer software product is stored in a storage medium and includes several instructions to cause a computer device (which may be a personal computer, server, network device, etc.) or processor to perform all or part of the steps of the methods described in the various embodiments of the present disclosure. The aforementioned storage medium includes: U disk, mobile hard disk, read-only memory (ROM), random access memory (RAM), magnetic disk, or optical disk, and other media that can store program code.

Embodiments of the present disclosure also provide a processor-readable storage medium. The processor-readable storage medium stores a computer program, and the computer program is used to cause the processor to execute the resource determination method on the terminal side or the network device side.

The processor-readable storage medium may be any available medium or data storage device that the processor can access, including but not limited to magnetic memory (such as floppy disk, hard disk, magnetic tape, magneto-optical disk (MO), etc.), optical memory (such as compact disk (CD), digital video disc (DVD), Blu-ray disc (BD), high-definition versatile disc (HVD), etc.), and semiconductor memory (such as read-only memory (ROM), erasable programmable read-only memory (EPROM), electrically erasable programmable read-only memory (EEPROM), non-volatile memory (NAND FLASH), solid-state drive (SSD), etc.).

The implementation embodiments of the resource determination method on the terminal side or the network device side are all applicable to the embodiments of the processor-readable storage medium and can achieve the same technical effects.

Those skilled in the art should understand that the embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program code.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, special-purpose computer, embedded processor, or other programmable data processing device to produce a machine, so that the instructions executed by the processor of the computer or other programmable data processing device produce means for implementing the functions specified in one or more flows of the flowchart and/or one or more blocks of the block diagram.

These computer-executable instructions may also be stored in a processor-readable memory that can direct a computer or other programmable data processing device to operate in a specific manner, so that the instructions stored in the processor-readable memory produce an article of manufacture including instruction means that implement the functions specified in one or more flows of the flowchart and/or one or more blocks of the block diagram.

These computer-executable instructions may also be loaded onto a computer or other programmable data processing device to cause a series of operational steps to be performed on the computer or other programmable device to produce computer-implemented processing, so that the instructions executed on the computer or other programmable device provide steps for implementing the functions specified in one or more flows of the flowchart and/or one or more blocks of the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A resource determination method, applied to a terminal, comprising:
determining a target configuration associated with a Monitoring Occasion (MO) according to a predefined rule;
wherein the target configuration comprises: a target control resource set, and/or a target symbol length, and/or a target frequency domain resource location;
wherein the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprises: a frequency domain location and/or a time domain location.

2. The resource determination method according to claim 1, further comprising:
receiving resource configuration information sent by a network device;
wherein the determining the target configuration associated with the MO according to the predefined rule comprises:
determining the target configuration associated with the MO according to the predefined rule and the resource configuration information;
wherein the resource configuration information comprises: configuration information of at least two control resource sets, and/or configuration information of at least two symbol lengths, and/or configuration information of at least two frequency domain resource locations;
wherein the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

3. The resource determination method according to claim 1, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
the configuration is a control resource set, a symbol length, and/or a frequency domain resource location.

4. The resource determination method according to claim 1, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

5. The resource determination method according to claim 4, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
wherein the type of symbol set comprises: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

6. The resource determination method according to claim 5, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

7. The resource determination method according to claim 1, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

8. A resource determination method, applied to a network device, comprising:
determining resource configuration information;
sending the resource configuration information to a terminal;
wherein the resource configuration information is used for the terminal to determine a target configuration associated with a Monitoring Occasion (MO) according to a predefined rule; wherein the target configuration comprises: a target control resource set, and/or a target symbol length, and/or a target frequency domain resource location;
wherein the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprising: a frequency domain location and/or a time domain location.

9. The resource determination method according to claim 8, wherein the resource configuration information comprises: configuration information of at least two control resource sets, and/or configuration information of at least two symbol lengths, and/or configuration information of at least two frequency domain resource locations;
wherein the configuration information of the at least two symbol lengths is configured to indicate at least two symbol lengths corresponding to one control resource set;
wherein the configuration information of the at least two frequency domain resource locations is configured to indicate at least two frequency domain resource locations corresponding to one control resource set.

10. The resource determination method according to claim 8, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
wherein the configuration is a control resource set, a symbol length, and/or a frequency domain resource location.

11. The resource determination method according to claim 8, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

12. The resource determination method according to claim 11, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
wherein the type of symbol set comprises: a first type where all included symbols are of a full downlink symbol type, a second type where all included symbols are of a full SBFD symbol type, and a third type where the included symbols include both the full downlink symbol type and the full SBFD symbol type;
wherein the SBFD symbol represents a symbol where an uplink subband is located;
the full downlink symbol and the SBFD symbol are determined according to network configuration information.

13. The resource determination method according to claim 12, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

14. The resource determination method according to claim 8, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

15. A resource determination device, wherein the resource determination device is a terminal and comprises: a memory, a transceiver, and a processor:
wherein the memory is configured to store a computer program;
the transceiver is configured to transmit and receive data under the control of the processor;
the processor is configured to read the computer program in the memory and perform:
determining a target configuration associated with a Monitoring Occasion (MO) according to a predefined rule;
wherein the target configuration comprises: a target control resource set, and/or a target symbol length, and/or a target frequency domain resource location;
wherein the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprising: a frequency domain location and/or a time domain location.

16. The resource determination device according to claim 15, wherein the operations further comprise:
receiving, via the transceiver, resource configuration information sent by a network device;
wherein the determining the target configuration associated with the Monitoring Occasion (MO) according to the predefined rule comprises:
determining the target configuration associated with the MO according to the predefined rule and the resource configuration information;
wherein the resource configuration information comprises: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

17. The resource determination device according to claim 15, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
the configuration is a control resource set, a symbol length, and/or a frequency domain resource location.

18. The resource determination device according to claim 15, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

19. The resource determination device according to claim 18, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
the type of symbol set comprises: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

20. The resource determination device according to claim 19, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

21. The resource determination device according to claim 15, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

22. A resource determination device, wherein the resource determination device is a network device, the device comprises: a memory, a transceiver, and a processor:
wherein the memory is configured to store a computer program;
the transceiver is configured to transmit and receive data under the control of the processor;
the processor is configured to read the computer program in the memory and perform:
determining resource configuration information;
sending the resource configuration information to a terminal via the transceiver;
wherein the resource configuration information is used for the terminal to determine a target configuration associated with a Monitoring Occasion (MO) according to a predefined rule; wherein the target configuration comprises: a target control resource set, and/or a target symbol length, and/or a target frequency domain resource location;
wherein the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprising: a frequency domain location and/or a time domain location.

23. The resource determination device according to claim 22, wherein the resource configuration information comprises: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

24. The resource determination device according to claim 22, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
the configuration is a control resource set, a symbol length, and/or a frequency domain resource location.

25. The resource determination device according to claim 22, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

26. The resource determination device according to claim 25, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
the type of symbol set comprises: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

27. The resource determination device according to claim 26, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

28. The resource determination device according to claim 22, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

29. A resource determination apparatus, applied to a terminal, comprising:
a first determination unit, configured to determine a target configuration associated with a Monitoring Occasion (MO) according to a predefined rule;
wherein the target configuration comprises: a target control resource set, and/or a target symbol length, and/or a target frequency domain resource location;
wherein the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprising: a frequency domain location and/or a time domain location.

30. The apparatus according to claim 29, wherein the apparatus further comprises:
a first receiving unit, configured to receive resource configuration information sent by a network device;
wherein the first determination unit is further configured to: determine the target configuration associated with the MO according to the predefined rule and the resource configuration information;
the resource configuration information comprises: configuration information of at least two control resource sets, and/or configuration information of at least two symbol lengths, and/or configuration information of at least two frequency domain resource locations;
the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

31. The apparatus according to claim 29, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
the configuration is a control resource set, a symbol length, and/or a frequency domain resource location.

32. The apparatus according to claim 29, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

33. The apparatus according to claim 32, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
the type of symbol set comprises: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

34. The apparatus according to claim 33, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

35. The apparatus according to claim 29, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

36. A resource determination apparatus, applied to a network device, comprising:
a second determination unit, configured to determine resource configuration information;
a first sending unit, configured to send the resource configuration information to a terminal;
wherein the resource configuration information is used for the terminal to determine a target configuration associated with a Monitoring Occasion (MO) according to a predefined rule; wherein the target configuration comprises: a target control resource set, and/or a target symbol length, and/or a target frequency domain resource location;
the predefined rule comprises at least one of:
a first rule associating an index of the MO within a time unit with a configuration; or
a second rule associating a starting symbol position of the MO with a configuration; or
a third rule that a frequency domain resource location associated with the MO does not overlap with a location of an uplink subband; wherein the location of the uplink subband is determined according to network configuration information, the location of the uplink subband comprising: a frequency domain location and/or a time domain location.

37. The apparatus according to claim 36, wherein the resource configuration information comprises: configuration information of at least two control resource sets, and/or configuration information of at least two symbol lengths, and/or configuration information of at least two frequency domain resource locations;
wherein the configuration information of the at least two symbol lengths is configured to indicate at least two symbol lengths corresponding to one control resource set;
the configuration information of the at least two frequency domain resource locations is configured to indicate at least two frequency domain resource locations corresponding to one control resource set.

38. The apparatus according to claim 36, wherein the first rule comprises:
a first correspondence relationship between an index of the MO within a time unit and a configuration;
wherein the MO is an MO associated with one search space;
the time unit is a slot, a subframe, a frame, or a Physical Downlink Control Channel (PDCCH) monitoring period;
the configuration is a control resource set, a symbol length, and/or a frequency domain resource location.

39. The apparatus according to claim 36, wherein the second rule comprises at least one of:
a second correspondence relationship between the MO and a configuration; wherein the MO is an MO indicated by each bit corresponding to monitoring symbol signaling within a slot; or
a third correspondence relationship between a starting symbol position of the MO and a configuration;
wherein the configuration is a control resource set, a symbol length, and/or a frequency domain resource location.

40. The apparatus according to claim 39, wherein the third correspondence relationship comprises at least one of:
a first sub-rule for determining a candidate symbol set where the MO is located according to the starting symbol position of the MO, and a second sub-rule associating a type of the candidate symbol set where the MO is located with a configuration;
wherein the configuration is a control resource set or a symbol length;
the type of symbol set comprises: a first type where all included symbols are of a full downlink symbol type, a second type where all included symbols are of a full SBFD symbol type, and a third type where the included symbols include both the full downlink symbol type and the full SBFD symbol type;
the SBFD symbol represents a symbol where an uplink subband is located;
the full downlink symbol and the SBFD symbol are determined according to network configuration information.

41. The apparatus according to claim 40, wherein the second sub-rule comprises at least one of:
in a case where there is one symbol set of the first type among at least two candidate symbol sets, adopting a configuration corresponding to the symbol set of the first type as the target configuration associated with the MO; or
in a case where there is no symbol set of the first type among at least two candidate symbol sets, and there is one symbol set of the second type, adopting a configuration corresponding to the symbol set of the second type as the target configuration associated with the MO; or
in a case where there are at least two symbol sets of the first type among at least two candidate symbol sets, adopting, according to a predefined protocol, a configuration corresponding to one of the at least two symbol sets of the first type as the target configuration associated with the MO; or
in a case where there are at least two symbol sets of the first type among at least two candidate symbol sets, adopting a configuration corresponding to the symbol set of the first type with the largest number of symbols as the target configuration associated with the MO; or
in a case where there are at least two symbol sets of the first type among at least two candidate symbol sets, adopting a configuration corresponding to the symbol set of the first type with the smallest number of symbols as the target configuration associated with the MO; or
in a case where there are at least two symbol sets of the second type among at least two candidate symbol sets, and there is one target set among the at least two symbol sets of the second type, adopting a configuration corresponding to the target set as the target configuration associated with the MO; wherein the target set is a symbol set of the second type whose corresponding frequency domain resource location does not overlap with the location of the uplink subband; or
in a case where there are at least two symbol sets of the second type among at least two candidate symbol sets, and there are at least two target sets among the at least two symbol sets of the second type, adopting, according to a predefined protocol, a configuration corresponding to one of the at least two target sets as the target configuration associated with the MO; or
in a case where there are at least two symbol sets of the second type among at least two candidate symbol sets, and there are at least two target sets among the at least two symbol sets of the second type, adopting a configuration corresponding to the target set with the largest number of symbols as the target configuration associated with the MO; or
in a case where there are at least two symbol sets of the second type among at least two candidate symbol sets, and there are at least two target sets among the at least two symbol sets of the second type, adopting a configuration corresponding to the target set with the smallest number of symbols as the target configuration associated with the MO.

42. The apparatus according to claim 36, wherein the third rule comprises at least one of:
determining a frequency domain resource location that does not overlap with the uplink subband location among at least two frequency domain resource locations as the target frequency domain resource location associated with the MO; or
in a case where there are at least two first frequency domain resource locations among at least two frequency domain resource locations, adopting, according to a predefined protocol, one of the at least two first frequency domain resource locations as the target frequency domain resource location associated with the MO; wherein the first frequency domain resource location is a frequency domain resource location that does not overlap with the uplink subband location; or
in a case where there are at least two second frequency domain resource locations among at least two frequency domain resource locations, adopting the frequency domain resource location with the largest number of corresponding Resource Blocks (RBs) among the at least two second frequency domain resource locations as the target frequency domain resource location associated with the MO; wherein the second frequency domain resource location is a frequency domain resource location that does not overlap with the uplink subband location; or
in a case where there are at least two third frequency domain resource locations among at least two frequency domain resource locations, adopting the frequency domain resource location with the smallest number of corresponding RBs among the at least two third frequency domain resource locations as the target frequency domain resource location associated with the MO; wherein the third frequency domain resource location is a frequency domain resource location that does not overlap with the uplink subband location.

43. A processor-readable storage medium, storing a computer program, wherein the computer program is configured to cause a processor to perform the resource determination method according to any one of claims 1 to 14.
